# EUROPÄISCHE PATENTSCHRIFT

(11) **EP 2 328 676 B1**
(45) Veröffentlichungstag und Bekanntmachung des Hinweises auf die Patenterteilung: **06.03.2013**
(21) Anmeldenummer: 09778774.1
(22) Anmeldetag: 30.09.2009
(51) Int. Cl.: B01F 7/00, F16F 15/02, F16M 1/04

(54) **RÜHRWERKSSTÄNDER**
STIRRER STAND
SUPPORT D'AGITATEUR

(30) Priorität: 04.10.2008 DE 102008050136
(43) Veröffentlichungstag der Anmeldung: 08.06.2011
(73) Patentinhaber: KSB Aktiengesellschaft, 67227 Frankenthal (DE)
(72) Erfinder: GEINITZ, Jürgen, 06120 HaIIe (DE); PENSLER, Thomas, 06179 Langenbogen (DE); KOCH, Thomas, 31698 Lindhorst (DE)
(86) Internationale Anmeldenummer: PCT/EP2009/007013
(87) Internationale Veröffentlichungsnummer: WO 2010/037530

(56) Entgegenhaltungen:
- EP-A2- 0 980 704
- DE-C1- 19 620 986

## Beschreibung

Die Erfindung betrifft einen Rührwerksständer für Tauchmotorrührwerke nach dem Oberbegriff des Anspruchs 1.

Bei Tauchmotorrührwerken handelt es sich um Rührwerke, die zusammen mit dem Antrieb unter Wasser eingesetzt werden. Üblicherweise werden sie in Wasseraufbereitungsanlagen, bei der Abwasserreinigung und der Abwasserbehandlung für unterschiedliche verfahrenstechnische Rühraufgaben in verschiedenen Einsatzgebieten eingesetzt. Der Rührwerksständer dient dazu, das Rührwerk in einem flüssigkeitsgefüllten Becken, einer entsprechenden Anlage oder dergleichen so zu positionieren, dass zwischen dem Beckenboden und der Rührorganspitze einerseits und der Rührorganspitze und dem Flüssigkeitsspiegel andererseits ein definierter Abstand eingehalten wird, der eine möglichst optimierte Funktion des Rührwerks garantiert.

Die Aufgabe des Rührwerks besteht grundsätzlich darin, in dem entsprechenden Becken oder der Anlage eine gute Strömungsführung zu erzielen, um die jeweilige verfahrenstechnische Aufgabe, beispielsweise eine gute Vermischung mehrerer Phasen, zu lösen. Der Rührwerksständer muß alle Kräfte und Momente aufnehmen, die einerseits aus der Arbeit des Rührwerks selbst entstehen und andererseits von der in Bewegung der im Becken bzw. im Strömungskanal befindlichen Flüssigkeit und der gegebenenfalls darin enthaltenen weiteren Phasen wie Gasen und Feststoffen herrühren. Die aufgenommenen Kräfte und Momente müssen an den Untergrund, beispielsweise den Beckenboden weitergeleitet bzw. in diesen abgeleitet werden.

Im Rahmen der Erfindung wird der Begriff Rührwerksständer verwendet. In gleicher Weise läßt sich der hier vorliegende Rührwerksständer aber auch als Ständer für eine Turbine verwenden. Während es die Aufgabe des Rührwerks ist, Strömungen zu erzeugen, Temperatur und Gasgehalt sowie Mikroben sowie weitere Zusatzstoffe beispielsweise für die Abwasserreinigung zu verteilen, und damit zur Wasserbehandlung oder für andere verfahrenstechnische Prozesse eingesetzt wird, besteht die Aufgabe einer Turbine darin, aus der sie umströmenden Strömung die Energie aufzunehmen und Strom zu erzeugen.

Rührwerksständer für Tauchmotorrührwerke oder Turbinen sind bereits in unterschiedlichen Ausführungsformen bekannt.

So sind beispielsweise Rührwerksständer bekannt, die aus einer Stahlkonstruktion bestehend aus miteinander verschweißten Profilen aufgebaut sind. Diese Stahlkonstruktionen sind üblicherweise mit dem als Führungsrohr ausgebildeten Führungsorgan für das Tauchmotorrührwerk verbunden. Das ermöglicht, dass das Tauchmotorrührwerk bei der Montage über das Führungsorgan in seine Montageposition überführt wird und dort vom Führungsorgan gehalten wird, wobei die aufgenommenen Kräfte über das Führungsorgan auf die gesamte Stahlkonstruktion übertragen wird. Aus der DE-A-39 00 630 ist ein Tauchmotorrührwerk bekannt, bei dem das Führungsrohr nur mit dem Beckenboden fest verbunden ist und bei dem zwei Stützen zur Aufnahme der Rückstoßkräfte des aus einem Motor und einem Propeller bestehenden Rührwerks vorgesehen sind, die einerseits unterhalb des Rührwerks am Führungsrohr und andererseits am Beckenboden befestigt sind.

In den jeweiligen Becken, in denen die Tauchmotorrührwerke angeordnet sind, treten unregelmäßige Strömungen auf, so dass das Rührorgan des Tauchmotorrührwerks unregelmäßig angeströmt wird. Problematisch sind darüber hinaus die durch die Umströmung des Gestells erzeugten Verwirbelungen. Die unregelmäßige Anströmungen führen zu Schwingungen innerhalb des Gestells, so dass sowohl das Tauchmotorrührwerk als auch das Gestell überdurchschnittlich stark belastet werden.

Aus der EP 0 980 704 B1, die einen Rührwerkständer gemäß dem Oberbegriff des Anspruchs, offenbart, wird zur möglichst schwingungsarmen Lagerung des Tauchmotorrührwerks vorgeschlagen, das vertikal über den Rührwerksständer hinausragende Führungsorgan, das dort als Führungsrohr ausgebildet ist, aus einem ersten Werkstoff, beispielsweise Stahl herzustellen und den Rührwerksständer selbst aus einem zweiten Werkstoff herzustellen, beispielsweise Beton, der eine unterschiedliche Schwingungscharakteristik gegenüber dem ersten Werkstoff aufweist. In der montierten Position ist das Tauchmotorrührwerk noch mit dem aus dem ersten Werkstoff bestehenden Führungsorgan verbunden. Während nun der aus Beton gefertigte Rührwerksständer selbst nahezu ideal starr ist, nimmt gleichzeitig das elastischere Führungsorgan, das auch in der montierten Position des Tauchmotorrührwerks mit diesem verbunden ist, einen Teil der entstehenden Kräfte und Momente auf.

Die vorbekannten Rührwerksständer haben allerdings verschiedene Nachteile. So sind die Rührwerksständer, welche vollständig aus Edelstahl gefertigt sind, sehr kostenintensiv und aufgrund der mangelnden Eigendämpfung auch sehr schwingungsanfällig. Die aus der EP 0 980 704 B1 bekannte Verwendung mehrerer Werkstoffe erfordert zusätzlich Montage- und Fügeprozesse. Die gemäß dieser Lösung vorgesehene Einleitung von Drehmomenten und Kräften auf das Führungsrohr fordert eine massive Auslegung des Führungsrohrs. Dies wiederum führt bei schwankenden Belastungen zu Schwingungen.

Aufgabe der vorliegenden Erfindung ist es, einen stabilen Rührwerksständer für Tauchmotorrührwerke zu schaffen, der eine möglichst schwingungsarme Lagerung des Tauchmotorrührwerks ermöglicht.

Erfindungsgemäß wird diese Aufgabe durch einen Rührwerksständer mit der Kombination der Merkmale des Anspruchs 1 gelöst.

Aufgrund dieser Lösung, in der ein Rührwerksständer für Tauchmotorrührwerke geschaffen ist, der zumindest aus einem Fußteil und einem Aufnahmeteil für das Tauchmotorrührwerk besteht, über das wiederum ein Führungsorgan herausragt, das zur Führung des Tauchmotorrührwerks während der Montage dient, ist der gesamte Rührwerksständer aus einem einzigen schwingungsdämpfenden Werkstoff gefertigt. Ein schwingungsdämpfender Werkstoff ist im Sinne der vorliegenden Erfindung ein Werkstoff mit einem niedrigen E-Modul. Gemäß der vorliegenden Erfindung nimmt der Rührwerksständer alle Belastungen des im Betrieb befindlichen Rührwerks oder der alternativ zu einem Rührwerk entsprechend aufgenommenen Turbine auf. Das Führungsorgan ist im Unterschied zum bekannten Stand der Technik nicht Bestandteil des Rührwerksständers selbst und nimmt in der Arbeitsstellung des Rührwerks weder Kräfte noch Momente des Rührwerks auf. Es dient ausschließlich zur Positionierung des Rührwerks bzw. der Turbine auf dem Ständer während des Montagevorgangs, also vor dem Einsatz in dem jeweiligen Becken.

Bevorzugte Ausgestaltungen der Erfindung ergeben sich aus den sich an den Hauptanspruch anschließenden Unteransprüchen.

Demnach kann der Rührwerksständer vorteilhaft aus Beton, Mineralguß, Gußeisen oder Verbundwerkstoffen mit niedrigem E-Modul bestehen.

Die Kontur des Aufnahmeteils ist so ausgebildet, dass sie das Rührwerk oder eine Turbine aufnehmen kann und in seiner bzw. ihrer Arbeitsposition fixieren kann. Hierzu sind vorteilhaft Wandungen vorgesehen, welche die Reaktionskräfte des aufgenommenen Tauchmotorrührwerks oder diejenigen der Turbine aufnehmen. Vorteilhaft kann das Tauchmotorrührwerk an seine dem Rührorgan gegenüberliegenden Seite Platten aufweisen, die an korrespondierenden Innenflächen der Wandungen des Aufnahmeteils anliegen. Diese Platten können vorzugsweise elastisch sein und damit zur Schwingungsdämpfung dienen.

Der Rührwerksständer ist einteilig ausgeführt. Der Rührwerksständer ist zur optimalen Einleitung der Kräfte und Momente in dem Beckenboden mit diesem durch geeignete Befestigungsmittel in vorteilhafter Art und Weise montiert. Diese Befestigungsmittel können beispielsweise aus chemischen Verankerungen, wie Klebedübeln, Reaktionsankern und/oder Verbundankern bestehen. Andererseits können aber auch bei Verwendung von Stahlbehältern Maschinenschrauben vorgesehen sein. Bei Kunststoffbehältern können beispielsweise metallische Buchsen eingesetzt sein, so dass sich auch hier eine Befestigung über Maschinenschrauben anbietet. Aber auch alle sonstig vorhandenen und bekannten Verbindungsanker können Verwendung finden.

Der Rührwerksständer weist vorteilhaft eine Ausnehmung auf, in der das Führungsorgan angeordnet ist, wobei dieses über in der Ausnehmung angeordnete Buchsen an ein oder mehreren Punkten im Rührwerksständer fixiert ist. Diese Buchsen bestehen vorteilhaft aus einem leichten, elastischen, druckfesten und schwingungsdämpfenden Material, vorzugsweise einem entsprechenden Kunststoff.

Das Führungsorgan kann bis zum Beckenboden reichen und dort fixiert sein, um die Kräfte aufzunehmen, die während der Montage des Tauchmotorrührwerks auftreten. Eine stärkere Dimensionierung des Führungsorgan bei der Aufhängung ist aber nicht notwendig, da es während des Betriebs des Tauchmotorrührwerks oder der statt diesem eingesetzten Turbinen ausschließlich vom Rührwerksständer und nicht vom Führungsorgan aufgenommen werden müssen.

Das Führungsorgan kann auch über einen am Beckenrand angeordneten Positionierungsmechanismus gehalten sein. Das Führungsorgan kann in einer Ausnehmung des Rührwerksständers angeordnet sein, wobei dieses in der Ausnehmung möglichst spielarm eingesteckt, eingeklebt oder eingegossen ist.

Vorteilhaft ist das Führungsorgan als Hohlprofil mit eckigem, vorzugsweise quadratischem Querschnitt ausgeführt. Aber auch jede andere Querschnittsausführung ist hier grundsätzlich möglich. So können rechteckige, dreieckige, fünfeckige, sechseckige oder auch achteckige Hohlprofile oder auch überhaupt Polygomprofile jeder Eckenzahl sowie runde Rohre - mit oder ohne - Leitrippen verwendet werden. Grundsätzlich können aber auch zwei oder mehr Rohre eingesetzt werden, die untereinander verbunden sein können, wobei hier natürlich darauf zu achten ist, dass diese einen definierten Abstand aufweisen und parallel sind. Möglich sind als Führungsorgane aber auch Doppel-T-Träger oder U-Profile.

Sämtliche Hohlprofile können mit einem zweiten oder mehreren Werkstoffen ausgegossen sein, um die Steifigkeit und Dämpfung zu verbessern.

Das Führungsorgan kann aus einem metallischen Werkstoff, wie Stahl, Gußeisen, extrudierten oder gegossenen Kunststoffen bestehen. Auch jeweils armierter Mineralguß, Beton oder Polymerbeton können Verwendung finden, wobei das Führungsorgan wahlweise mit einem anderen Werkstoff ausgegossen werden kann, wenn es ein Hohlprofil ist. Es kann aber auch im Rahmen der Erfindung als Vollprofil ausgeführt sein.

Weitere Merkmale, Einzelheiten und Vorteile der Erfindung ergeben sich aus einem in der Zeichnung dargestellten Ausführungsbeispiel. Es zeigen:
- Figur 1:: eine schematische Darstellung eines Rührwerksständers mit montiertem Motorrührwerk,
- Figur 2:: eine perspektivische Detaildarstellung der Darstellung gemäß Figur 1,

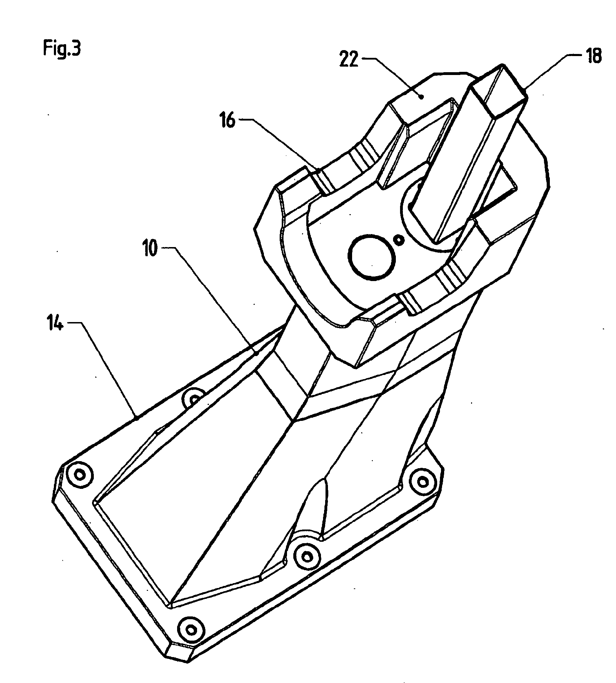

- Figur 3:: eine perspektivische Darstellung des Rührwerksständers in einer Ansicht von schräg oben,
- Figur 4:: eine perspektivische Ansicht des Rührwerksständers gemäß Figur 3 von schräg unten,
- Figur 5:: einen Längsschnitt durch einen Rührwerksständer gemäß Figur 3 und 4,
- Figur 6:: eine perspektivische Ansicht eines Tauchmotorrührwerks mit angesetztem Rührorgan und
- Figur 7:: eine unterschiedliche perspektivische Ansicht des Tauchmotorrührwerks gemäß Figur 6.

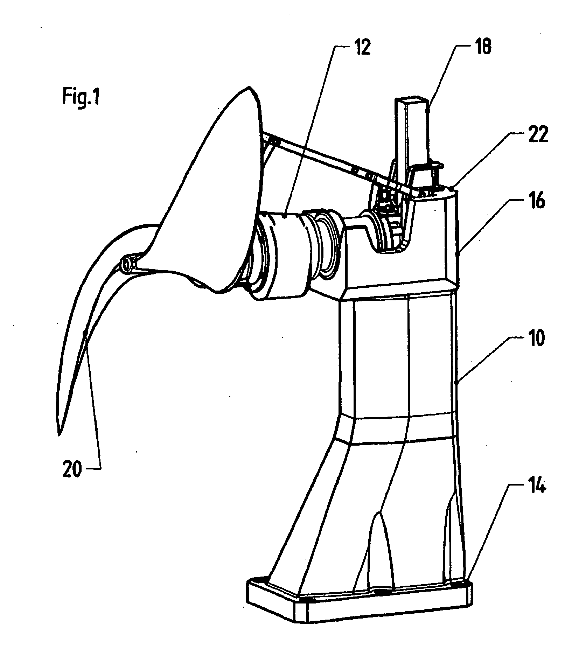

In Figur 1 ist ein Rührwerksständer 10 gezeigt, der in dieser Ausführungsvariante als einstückiges Betonformteil gefertigt ist und einen Fußteil 14 und ein Aufnahmeteil 16 aufweist. Die Kontur des Aufnahmeteils 16 ist, wie in der Figur 1 deutlich gemacht wird, so ausgebildet, dass sie ein Tauchmotorrührwerk 12, wie es hier dargestellt ist, oder aber alternativ zu diesem eine Turbine aufnehmen kann und in seiner Arbeitsposition fixiert. Das Tauchmotorrührwerk 12 weist ein hier als zweiflügeligen Propeller ausgestaltetes Rührorgan 20 auf. Über den Rührwerksständer 10 ragt ein Führungsorgan 18, das in der Figur 1 nur teilweise dargestellt ist. Dieses Führungsorgan 18, das hier als ein Stahlrohr mit quadratischem Querschnitt ausgebildet ist, dient lediglich zur Führung des Tauchmotorrührwerks 12 während Vertikalbewegungen. Hierzu weist das Tauchmotorrührwerk 12 auf der vom Rührorgan 20 wegweisenden Seite einen Gleitschlitten oder eine Halterung auf, die möglichst aus Kunststoffplatten besteht, um hier eine Führung entlang des Führungsorgans 18 zu ermöglichen. Hierdurch kann das Tauchmotorrührwerk über eine längere Strecke vom Beckenrand bis zum Aufnahmeteil des Rührwerksständers abgesenkt oder herausgehoben werden. Nach Montage des Tauchmotorrührwerks im Aufnahmeteil 16 erfüllt das Führungsorgan 18 keine weiteren Halterungs- oder Führungsfunktionen des Tauchmotorrührwerks mehr.

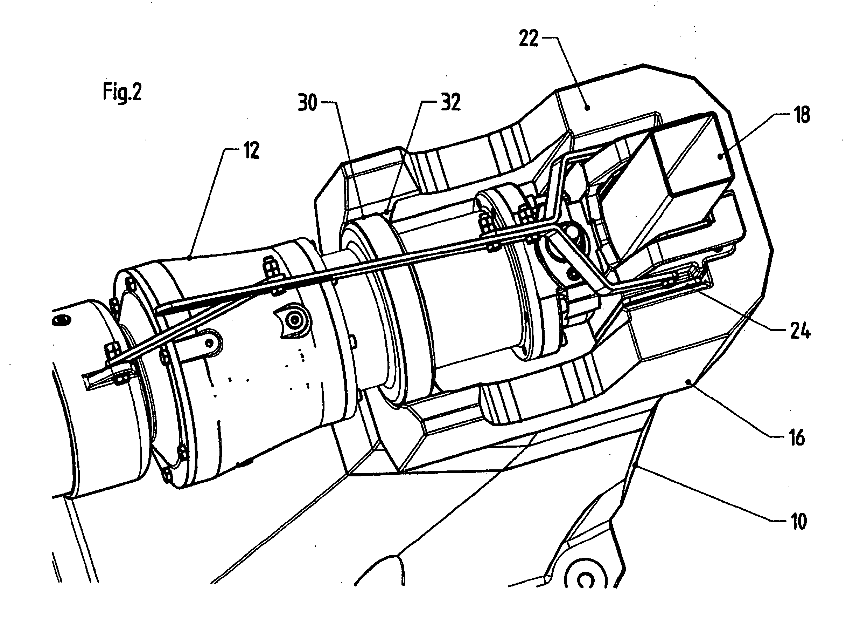

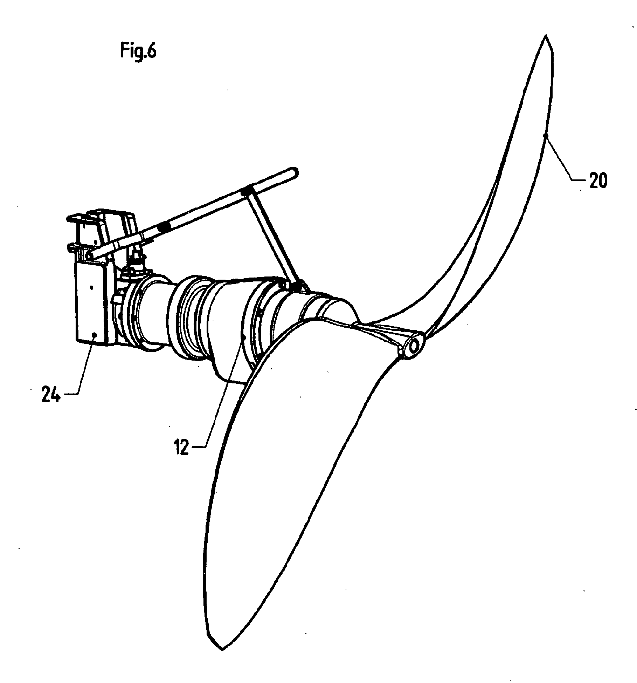

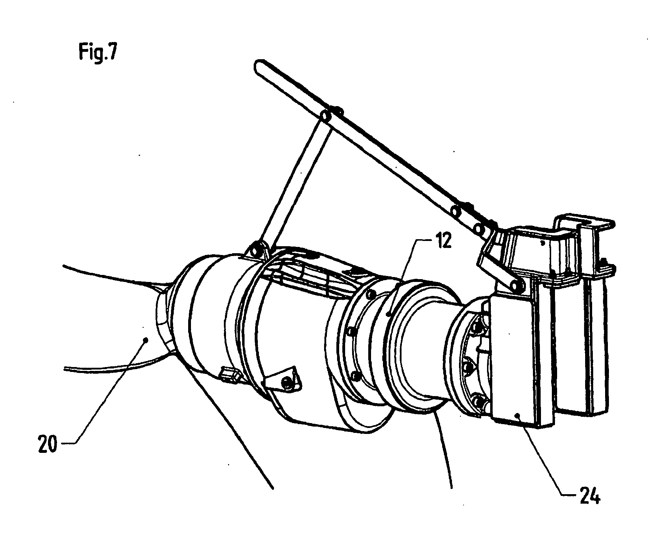

Zu dem in Fig. 2 dargestellten Montagezustand des Tauchmotorrührwerks 12 in dem Aufnahmeteil 16 dienen zunächst entsprechende, im Aufnahmeteil 16 des Rührwerksständers 10 ausgebildete Wandungen 22. An diesen liegt unmittelbar das jeweilige dem Rührorgan 20 gegenüberliegende Ende des Tauchmotorrührwerks, wobei hier am Tauchmotorrührwerk entsprechende Platten 24 (vgl. auch Figuren 6 und 7) angeordnet sind, die an den Innenflächen der Wandungen 22 vollflächig anliegen. Somit übertragen die rückwärtigen, in Fig. 7 erkennbaren Platten 24 den Axialschub und/oder die Reaktionskräfte des Tauchmotorrührwerks auf die senkrechte Innenfläche der Wandungen 22 in den Rührwerksständer 10. Die seitlichen Platten 24 nehmen das Rückdrehmoment des Tauchmotorrührwerkes auf und übertragen es auf die korrespondierenden Flächen der Wandungen 22 des Aufnahmeteils 16. Im vorderen Teil stützt sich das Tauchmotorrührwerk 12 über einen flanschartigen Ring 30 an einer entsprechenden ringförmigen Aufnehmung 32 des Aufnahmeteils ab.

Im Betriebszustand ist der Rührwerksständer 10 mit dem montierten Tauchmotorrührwerk 12 vollständig in einem hier nicht näher dargestellten Becken untergetaucht angeordnet.

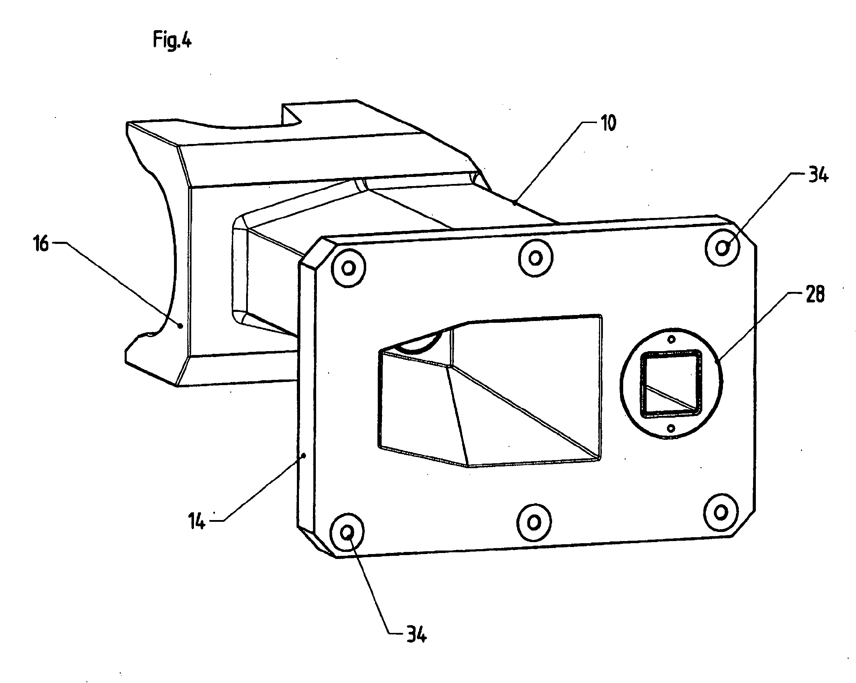

Die Befestigung am Beckenboden, der in der Regel ein Betonboden sein dürfte, wird üblicherweise mit chemischen Verankerungen, die hier nicht näher dargestellt sind, realisiert. Hier sind Klebedübel, Reaktionsanker oder Verbundanker üblich. Soweit der Rührwerksständer in einem Stahlbehälter angeordnet wird, können hier Maschinenschrauben als Anker vorgesehen sein. Hierzu sind in der Darstellung gemäß Figur 4 sechs Durchgangsbohrungen 34 vorgesehen. Soweit das Becken aus einem Kunststoffbehälter besteht, können hier auch metallische Buchsen eingesetzt sein, so dass hier als Anker auch Maschinenschrauben eingesetzt werden können, die durch die Durchgangsbohrungen 34 im Rührwerksständer 10 gesteckt werden können.

Zu einer optimalen vollflächigen Auflage des Rührwerksständers 10 kann auf einem unebenen Boden, der beispielsweise aus Beton besteht, zum Ausgleich von Bodenunebenheiten eine Ausgleichsmasse, in Form eines Untergusses oder einer Kartusche eingesetzt werden. Diese Maßnahmen sind aus dem Stand der Technik bereits bekannt und sind daher hier nicht näher zeichnerisch dargestellt.

Alternativ könnte der Rührwerksständer 10 auch in einer Vertiefung des Beckenbodens positioniert und dort vergossen bzw. eingeklebt werden, wie dies beispielsweise aus dem Bereich Montage von Lichtmasten oder Oberleitungsmasten der Eisenbahn realisiert ist.

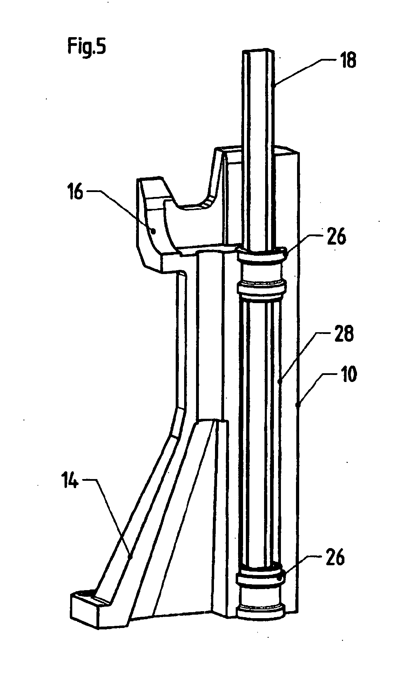

Aus der Darstellung gemäß Figur 5 ist ersichtlich, dass im Rührwerksständer 10 eine Ausnehmung 28 vorgesehen ist, durch die das Führungsorgan 18 gesteckt ist. Dieses ist vorteilhaft im Bereich des Beckenbodens fixiert. In der Ausnehmung 28 kann es durch die hier dargestellten beiden Kunststoffbuchsen 26, die aus einem leicht elastischen, druckfesten und schwingungsdämpfenden Kunststoff bestehen, gehalten werden. Die Oberseite des Führungsorgans 20 weist in hier nicht dargestellter Art und Weise über den Flüssigkeitsspiegel hinaus und ist entweder freistehend oder in seinem oberen Bereich mit einer Halterung am Beckenrand, einer Brücke oder einem Querträger befestigt.

Das Führungsorgan 18 kann in der hier dargestellten Ausführungsform vergleichsweise schwach dimensioniert werden, da es während des Betriebs des Tauchmotorrührwerks 12 keine Kräfte und Momente aus dem Tauchmotorrührwerk aufnehmen muß. Ihm kommt vielmehr eine reine Führungsfunktion zum Positionieren des Tauchmotorrührwerks 12 auf dem Rührwerksständer 10 zu. Auf das Führungsorgan wirken nur Kräfte, die aus der Anströmung resultieren, d. h. die Strömungskräfte der im Becken enthaltenen Flüssigkeit sowie die mechanischen Einflüsse, die bei der Belüftung des Beckeninhalts entstehen.

## Patentansprüche

1. Rührwerksständer (10) für Tauchmotorrührwerke (12) zumindest bestehend aus einem Fußteil (14) und einem Aufnahmeteil (16) für das Tauchmotorrührwerk (12), über das ein Führungsorgan (18) hinausragt, das zur Führung des Tauchmotorrührwerks (12) während der Montage dient,
**dadurch gekennzeichnet,**
**dass** der gesamte Rührwerksständer (10) als einstückiges Formteil, umfassend einen Fußteil (14) und einen Aufnahmeteil (16), aus einem einzigen schwingungsdämpfenden Werkstoff besteht.

2. Rührwerksständer nach Anspruch 1, **dadurch gekennzeichnet, dass** der Rührwerksständer (10) aus Beton, Mineralguß, Gußeisen oder Verbundwerkstoffen besteht.

3. Rührwerksständer nach Anspruch 1, **dadurch gekennzeichnet, dass** die Kontur des Aufnahmeteils (16) so ausgebildet ist, dass sie ein Tauchmotorrührwerk (12) aufnimmt und in seiner Arbeitsposition fixiert.

4. Rührwerksständer nach Anspruch 1 oder 2, **dadurch gekennzeichnet, dass** das Aufnahmeteil (16) Wandungen (22) aufweist, welche die Reaktionskräfte des aufgenommenen Tauchmotorrührwerks (10) aufnehmen.

5. Rührwerksständer nach Anspruch 3, **dadurch gekennzeichnet, dass** das Tauchmotorrührwerk (12) an seiner dem Rührorgan (20) gegenüberliegenden Seite Platten (24) aufweist, die an korrespondierenden Innenflächen der Wandungen (22) des Aufnahmeteils anliegen.

6. Rührwerksständer nach einem der Ansprüche 1 bis 4, **dadurch gekennzeichnet, dass** er an einem Beckenboden mit geeigneten Befestigungsmitteln montierbar ist.

7. Rührwerksständer nach Anspruch 5, **dadurch gekennzeichnet, dass** die Befestigungsmittel aus chemischen Verankerungen, wie Klebedübeln, Reaktionsankern und/oder Verbundankern, Maschinenschrauben oder sonstigen Verbindungsankern besteht.

8. Rührwerksständer nach einem der Ansprüche 1 bis 6, **dadurch gekennzeichnet, dass** er eine Ausnehmung (28) aufweist, in der das Führungsorgan (18) angeordnet ist, wobei dieses über in der Ausnehmung (28) angeordnete Buchsen (26) an ein oder mehreren Punkten im Rühnnrerksständer (10) fixiert ist.

9. Rührwerksständer nach Anspruch 7, **dadurch gekennzeichnet, dass** die Buchsen (26) aus einem leichten, elastischen, druckfesten und schwingungsdämpfenden Material, vorzugsweise Kunststoff, bestehen.

10. Rührwerksständer nach einem der vorangehenden Ansprüche, **dadurch gekennzeichnet, dass** das Führungsorgan (18) bis zum Beckenboden reicht und dort fixiert ist.

11. Rührwerksständer nach einem der vorangehenden Ansprüche, **dadurch gekennzeichnet, dass** das Führungsorgan (18) über einen am Beckenrand angeordneten Positionierungsmechanismus gehalten ist.

12. Rührwerksständer nach einem der Ansprüche 1 bis 6, **dadurch gekennzeichnet, dass** er eine Ausnehmung aufweist, in der das Führungsorgan (18) angeordnet ist, wobei dieses in dieser Ausnehmung möglichst spielarm eingesteckt, eingeklebt oder eingegossen ist.

13. Rührwerksständer nach einem der Ansprüche 1 bis 11, **dadurch gekennzeichnet, dass** das Führungsorgan (18) als Hohlprofil mit eckigem, vorzugsweise quadratischem Querschnitt ausgeführt ist.

14. Rührwerksständer nach einem der vorangehenden Ansprüche, **dadurch gekennzeichnet, dass** das Führungsorgan (18) aus einem metallischen Werkstoff, wie Stahl, Gußeisen, aus extrudiertem oder gegossenem Kunststoff oder aus gegebenenfalls jeweils armierten Mineralguß, Beton oder Polymerbeton besteht, wobei es als Hohlkörper, der wahlweise mit einem anderen Werkstoff ausgegossen ist, oder als Vollprofil ausgeführt ist.

## Claims

1. Stirrer stand (10) for submersible motor stirrers (12), at least comprising a foot part (14) and a receiving part (16) for the submersible motor stirrer (12), which receiving part is overtopped by a guide member (18) serving to guide the submersible motor stirrer (12) during assembly,
**characterized**
**in that** the whole of the stirrer stand (10), as a one-piece shaped part comprising a foot part (14) and a receiving part (16), consists of a single, vibration-damping material.

2. Stirrer stand according to Claim 1, **characterized in that** the stirrer stand (10) consists of concrete, cast mineral composite, cast iron or composite materials.

3. Stirrer stand according to Claim 1, **characterized in that** the contour of the receiving part (16) is configured such that it receives a submersible motor stirrer (12) and fixes it in its working position.

4. Stirrer stand according to Claim 1 or 2, **characterized in that** the receiving part (16) has walls (22), which absorb the reaction forces of the received submersible motor stirrer (12).

5. Stirrer stand according to Claim 3, **characterized in that** the submersible motor stirrer (12), on its side lying opposite the stirring member (20), has plates (24), which plates bear against corresponding inner faces of the walls (22) of the receiving part.

6. Stirrer stand according to one of Claims 1 to 4, **characterized in that** it can be fitted to a bottom of the basin with suitable fastening means.

7. Stirrer stand according to Claim 5, **characterized in that** the fastening means comprise chemical anchorages, such as adhesive dowels, reaction anchors and/or shear connectors, machine screws or other connecting anchors.

8. Stirrer stand according to one of Claims 1 to 6, **characterized in that** it has a recess (28) in which the guide member (18) is disposed, which latter is fixed at one or more points in the stirrer stand (10) by means of bushings (26) disposed in the recess (28).

9. Stirrer stand according to Claim 7, **characterized in that** the bushings (26) consist of a light, elastic, pressure-resistant and vibration-damping material, preferably plastic.

10. Stirrer stand according to one of the preceding claims, **characterized in that** the guide member (18) reaches to the bottom of the basin and is fixed there.

11. Stirrer stand according to one of the preceding claims, **characterized in that** the guide member (18) is held by means of a positioning mechanism disposed on the rim of the basin.

12. Stirrer stand according to one of Claims 1 to 6, **characterized in that** it has a recess in which the guide member (18) is disposed, which latter is plugged, glued or cast in this recess with as little play as possible.

13. Stirrer stand according to one of Claims 1 to 11, **characterized in that** the guide member (18) is realized as a hollow profile of angular, preferably square, cross section.

14. Stirrer stand according to one of the preceding claims, **characterized in that** the guide member (18) consists of a metallic material, such as steel, cast iron, extruded or molded plastic, or of, if need be, respectively reinforced cast mineral composite, concrete or polymer concrete, in which case it is realized as a hollow body, selectively lined with another material, or as a solid profile.

## Revendications

1. Support d'agitateur (10) pour agitateurs à moteur immergé (12) se composant au moins d'une partie de pied (14) et d'une partie de réception (16) pour l'agitateur à moteur immergé (12), au-delà duquel s'étend un organe de guidage (18), qui sert pour le guidage de l'agitateur à moteur immergé (12) pendant le montage, **caractérisé en ce que** tout le support d'agitateur (10) est constitué d'un seul matériau amortisseur des vibrations, sous la forme d'une pièce moulée monobloc, comprenant une partie de pied (14) et une partie de réception (16).

2. Support d'agitateur selon la revendication 1, **caractérisé en ce que** le support d'agitateur (10) est constitué de béton, de minéral moulé, de fonte moulée ou de matériaux composites.

3. Support d'agitateur selon la revendication 1, **caractérisé en ce que** le contour de la partie de réception (16) est réalisé de façon à y installer un agitateur à moteur immergé (12) et à le fixer dans sa position de travail.

4. Support d'agitateur selon la revendication 1 ou 2, **caractérisé en ce que** la partie de réception (16) comporte des parois (22), qui reprennent les efforts de réaction de l'agitateur à moteur immergé installé (12).

5. Support d'agitateur selon la revendication 3, **caractérisé en ce que** l'agitateur à moteur immergé (12) comporte, sur son côté opposé à l'organe d'agitation (20), des plaques (24) qui sont appliquées sur des faces intérieures correspondantes des parois (22) de la partie de réception.

6. Support d'agitateur selon l'une quelconque des revendications 1 à 4, **caractérisé en ce qu'**il peut être monté sur un fond de bassin avec des moyens de fixation appropriés.

7. Support d'agitateur selon la revendication 5, **caractérisé en ce que** les moyens de fixation sont constitués par des ancrages chimiques, comme des chevilles collantes, des ancrages par réaction et/ou des ancrages composites, des vis d'assemblage ou d'autres ancrages d'assemblage.

8. Support d'agitateur selon l'une quelconque des revendications 1 à 6, **caractérisé en ce qu'**il comporte un évidement (28), dans lequel l'organe de guidage (18) est disposé, dans lequel celui-ci est fixé en un ou plusieurs points dans le support d'agitateur (10) par l'intermédiaire de douilles (26) disposées dans l'évidement (28).

9. Support d'agitateur selon la revendication 7, **caractérisé en ce que** les douilles (26) sont constituées d'un matériau léger, élastique, résistant à la pression et amortisseur des vibrations, de préférence d'une matière plastique.

10. Support d'agitateur selon l'une quelconque des revendications précédentes, **caractérisé en ce que** l'organe de guidage (18) s'étend jusqu'au fond du bassin et y est fixé.

11. Support d'agitateur selon l'une quelconque des revendications précédentes, **caractérisé en ce que** l'organe de guidage (18) est maintenu au moyen d'un mécanisme de positionnement disposé sur le bord du bassin.

12. Support d'agitateur selon l'une quelconque des revendications 1 à 6, **caractérisé en ce qu'**il comporte un évidement dans lequel l'organe de guidage (18) est disposé, dans lequel celui-ci est engagé, scellé ou moulé dans cet évidement avec un jeu aussi faible que possible.

13. Support d'agitateur selon l'une quelconque des revendications 1 à 11, **caractérisé en ce que** l'organe de guidage (18) est réalisé sous la forme d'un profilé creux, avec une section transversale polygonale, de préférence carrée.

14. Support d'agitateur selon l'une quelconque des revendications précédentes, **caractérisé en ce que** l'organe de guidage (18) est constitué d'un matériau métallique, comme l'acier, la fonte moulée, d'une matière plastique extrudée ou moulée ou d'un minéral moulé, de béton ou d'un béton polymère, le cas échéant respectivement armé, dans lequel il est réalisé sous la forme d'un corps creux qui est au choix comblé avec un autre matériau, ou sous la forme d'un profilé massif.
